# EUROPEAN PATENT SPECIFICATION

(11) **EP 0 418 611 B1**
(45) Date of publication and mention of the grant of the patent: **04.12.1996**
(21) Application number: 90116649.6
(22) Date of filing: 30.08.1990
(51) Int. Cl.: G11B 7/24

(54) **Optical information recording medium, method and apparatus**
Medium für optische Datenaufzeichnung, Verfahren und Apparat
Moyen d'enregistrement optique, procédé et appareil

(30) Priority: 30.08.1989 JP 221817/89; 02.12.1989 JP 314065/89; 27.04.1990 JP 110069/89
(43) Date of publication of application: 27.03.1991
(73) Proprietor: HITACHI, LTD., Chiyoda-ku, Tokyo 101 (JP)
(72) Inventor: Kobayashi, Setsuo, Hitachi-shi (JP); Iwasaki, Kishiro, Hitachiota-shi (JP); Nakamura, Mariko, Saiwai-ku, Kawasaki-shi (JP); Sasaki, Hiroshi, Naka-gun, Ibaraki-ken (JP); Ito, Yutaka, Takahagi-shi (JP)
(74) Representative: Beetz & Partner Patentanwälte

(56) References cited:
- EP-A- 0 279 501
- EP-A- 0 285 965
- EP-A- 0 325 990
- EP-A- 0 373 643
- EP-A- 0 376 327
- PATENT ABSTRACTS OF JAPAN vol. 10, no. 7 (P-419)(2064) 11 January 1986

## Description

This invention relates to an optical information recording medium for recording and reading out information by means of a laser beam, a process for producing the same, a readout (or playback) apparatus for optical information recording media, and a process for reading out information from these optical information recording media.

Recently, as means for writing and reading out information in compact discs, video discs, photosensitive members for laser beam printers, optical letter readout machines, etc., optical recording media and apparatus applying a laser diode beam are practically used. For these applications an optical recording medium which absorbs a laser diode beam, that is, near infrared rays, is necessary. As the recording medium, there have been proposed recording media having an inorganic recording layer of tellurium, an alloy of tellurium, an alloy of bismuth, or the like, recording media having an organic dye-containing recording layer such as a phthalocyanine dye (US-A-4 298 995), a naphthalocyanine dye (JP-1-198391), etc.

However, optical recording media having an inorganic recording layer (inorganic recording media) have problems in that an improvement in the productivity is difficult due to the necessity of employing a process under vacuum such as vacuum deposition, sputtering, etc. for forming a thin film on a substrate, an improvement in the recording density is limited due to a high thermal conductivity of the recording layer, and tellurium, selenium, and the like are toxic substances requiring careful handling from the viewpoint of safety and health.

On the other hand, the recording media containing organic dyes (organic recording media) are inferior in properties such as durability and reflectance to the inorganic recording media. Further, the recording media containing organic dyes are insufficient in both durability and solubility of the dyes in a solvent. However, with such organic recording media it seems to be possible to overcome the problems of the inorganic recordng media. Thus, organic recording media having the same durability as the inorganic recording media and which can be produced by spin coating or dip coating have been studied.

For example, there has been proposed an optical recording medium having an organic thin film of various derivatives of naphthalocyanines having Al, Ga, In, Te, Si, Ge, Sn, Pb, etc. as central metal (JP-A-1-198391).

EP-A-279 501 discloses an optical recording medium comprising an information recording layer which contains a naphthalocyanine dye which forms a recording layer of high reflectance and withstands 10⁶ readout cycles at a laser power of 1 mW at 830 nm. These known optical recording media do not contain a second organic dye serving as a thermal quencher.

At present, organic recording media are used in systems wherein a playback readout power of 0.5 mW or less is used in order to reduce the damage for the organic recording medium layer. However, when a playback laser beam power of 0.5 mW or less is used, there arise various problems in that outer noises are easily introduced, no interchangeability exists for the apparatus using a playback readout power of 1 mW, and the like.

In order to improve the readout light stability of the organic optical recording media, there has been proposed the addition of a singlet oxygen quencher to a cyanine dye (JP-A-1-21798). Such a method is effective for preventing the cyanine dye from deterioration by light but not effective for the heat energy of a laser beam of 1 mW.

It is the object of the present invention to provide an optical information recording medium excellent in durability and reflectance of an information recording medium layer, which can be produced by spin coating, spray coating or dip coating an organic recording medium layer on a substrate, and to provide a process for producing such an optical information recording medium and the applications of such an optical information recording medium.

The above object is achieved according to the independent claims. The dependent claims relate to preferred embodiments.

The optical information recording medium of the present invention comprises a substrate and an information recording layer formed on the substrate, the information recording layer comprising at least two organic dyes having different chemical structures; it is
characterized in that
at least one of the organic dyes having different chemical structure is an organic dye having a pyrolysis beginning temperature of 300 °C or less and is selected from derivatives of azaphthalocyanine, phthalocyanine and naphthalocyanine, and another of the organic dyes is a thermal quencher having a pyrolysis beginning temperature of 350 °C or higher and a function for preventing thermal deterioration,
and the information recording medium has a continuous playback or readout ability of 10⁵ times or more at a playback laser power of 0.5 to 1.5 mW.

According to a preferred embodiment, the information recording layer comprises (i) at least one organic dye of the formula I 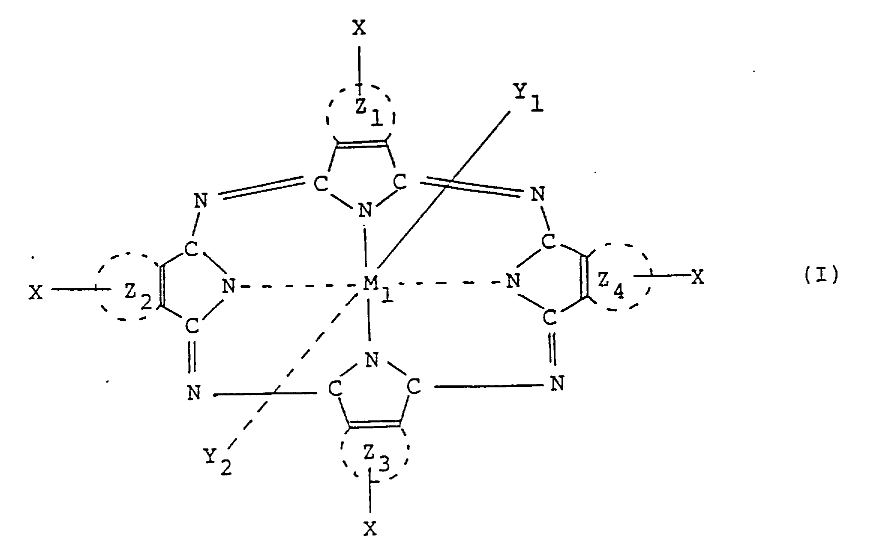 wherein M₁ is a metal atom selected from Si, Ge and Sn belonging to the group IV of the periodic table; Z₁, Z₂, Z₃ and Z₄ are independently a pyridine ring, a benzene ring or a naphthalene ring non-substituted or having one or more monovalent substituents -X, where X is an alkyl group, an alkenyl group, an alkylthio group, a phenyl group, an acyl group or a trisubstituted silyl group; Y₁ and Y₂ are independently -AR, -OR, -OAr, -OSi ( R)₃, -OSi ( OR)₃, -OSi(OAr)₃ or -OC(C₆H₅)₃, wherein R is a straight- or branched chain alkyl group, and Ar is a phenyl group, a substituted phenyl group, a benzyl group or a substituted benzyl group.

According to the present invention, this dye has a pyrolysis beginning temperature of 300°C or lower.

According to another preferred embodiment, the thermal quencher (ii) is at least one organic dye of the formula II 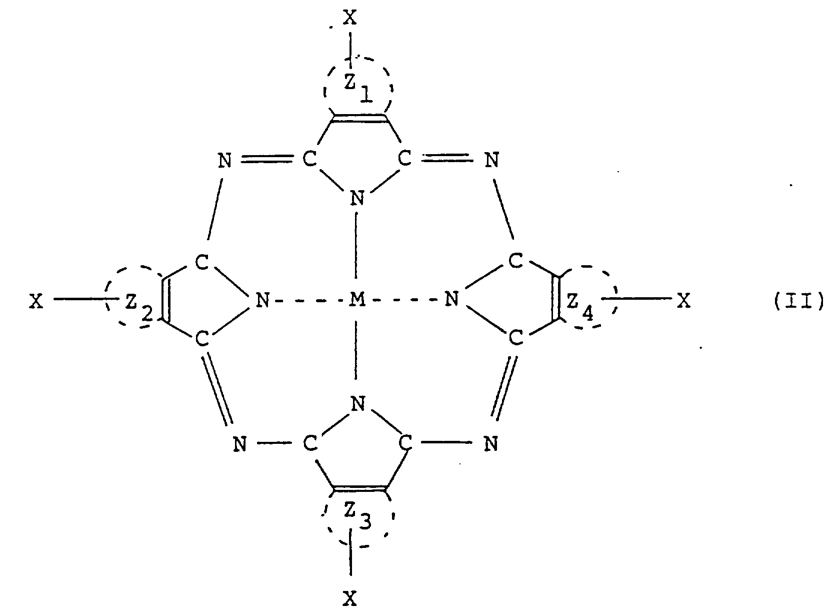 wherein M is a transition metal, and Z₁, Z₂, Z₃, Z₄ and X are as defined above.

The method of the present invention for producing the optical information recording medium as defined above comprises the steps of
(A) dissolving at least two organic dyes having different chemical structure in an organic solvent,
(B) coating a substrate with the solution, preferably by spin coating the substrate, or by dipping the substrate in the solution and picking up the substrate therefrom, or by spray coating,
   and
(C) removing the solvent; it is
characterized in that, in step A, at least one dye having a pyrolysis beginning temperature of 300 °C or less, and being selected from derivatives of azaphthalocyanine, phthalocyanine and/or naphthalocyanine, and at least one dye being a thermal quencher and having a pyrolysis beginning temperature of 350 °C or higher are used.

The resulting recording layer preferably has a thickness of 10 to 200 nm.

The optical information playback or readout apparatus of the present invention comprises an optical information recording medium, an optical head equipped with a laser beam generator capable of reading out information from the optical information recording medium, rotating means for rotating the optical information recording medium, a drive circuit for controlling the operation of the optical head and the rotational speed of the rotative means, a processor for controlling the drive circuit, input means for the input of information into the processor, and output means for putting out information from the processor; it is characterized by an optical information recording medium according to the present invention as defined above.

The apparatus preferably comprises a laser/laser beam generator emitting a laser beam having a wavelength of 640 to 720 nm or of 780 to 830 nm.

The method of the present invention for reading out information from an optical information recording medium comprising a substrate and an information recording layer formed on the substrate comprises irradiating a laser beam on the information recording layer of the optical information recording medium, and reading out the information recorded on or in the optical information recording medium/information recording layer on the basis of the optical modulation of reflected or transmitted light; it is characterized in that an optical information recording medium of the present invention is used.

In the following, the invention will be further explained with reference to the drawings.
- Fig. 1: is a graph showing the readout light stability when bis(tributylsiloxy)-germanium-tetra-(octyloxy)-naphthalocyanine and copper tetra-t-butylnaphthalocyanine (mass ratio 5:4) are used as organic dyes.
- Fig. 2: is a graph showing the readout light stability when bis(triethylsiloxy)-germanium-tetra-(octyloxy)-naphthalocyanine and copper tetra-t-butylnaphthalocyanine (mass ratio 4:3) are used as organic dyes.
- Fig. 3: is a graph showing the readout light stability when bis(tributylsiloxy)-germanium-tetra-(octyl-oxycarbonyl)-naphthalocyanine alone is used as organic dye.
- Fig. 4: is a schematic block diagram showing the optical system of a recording and playback apparatus.
- Fig. 5: shows a laser output wave-form of readout light.
- Fig. 6: shows a laser output wave-form of readout light.
- Fig. 7: shows transmittance and reflectance spectra of a bis(triphenylsiloxy)-silicon-phthalocyanine thin film.
- Fig. 8: shows transmittance and reflectance spectra of a bis(phenoxy)-silicon-phthalocyanine thin film.
- Fig. 9: shows transmittance and reflectance spectra of a vanadyl-tetra-t-butyl-naphthalocyanine thin film.
- Fig. 10: comprises cross-sectional views of one example of the optical information recording medium of the present invention.

According to the invention, at least two organic dyes have different chemical structure. The words "different chemical structure" mean that at least one organic dye has a bulky (or top-like) structure wherein large side chains are projecting from the central atom, and at least one organic dye has a flat structure.

The pyrolysis beginning temperature (P.B.T.) can be measured by using, for example, a differencial scanning thermobalance (e.g., TAS-100, manufactured by Rigaku Kabushiki Kaisha, JP).

Preferred examples of compounds of formula I are:

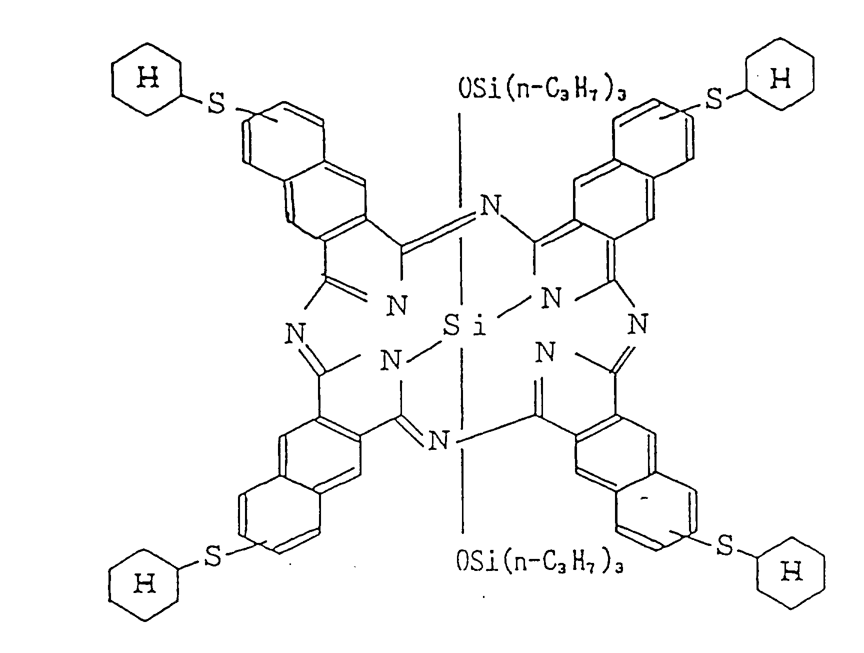

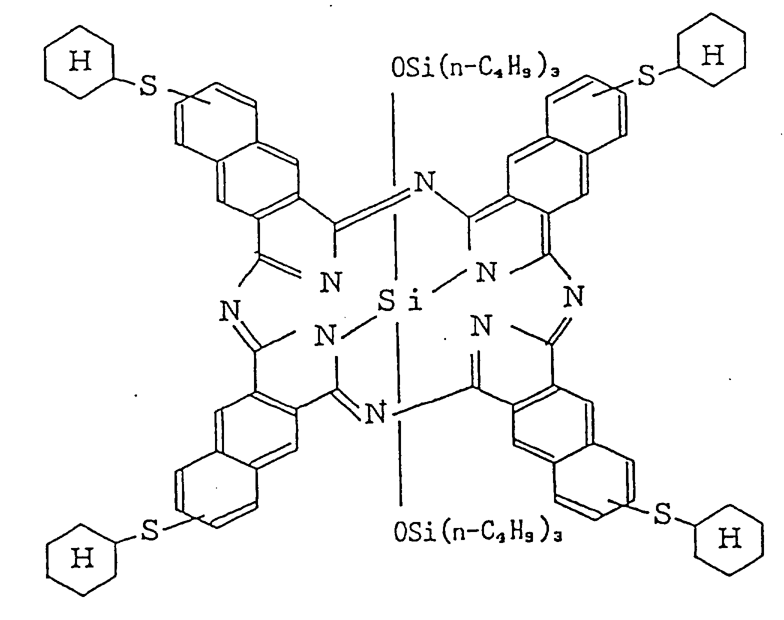

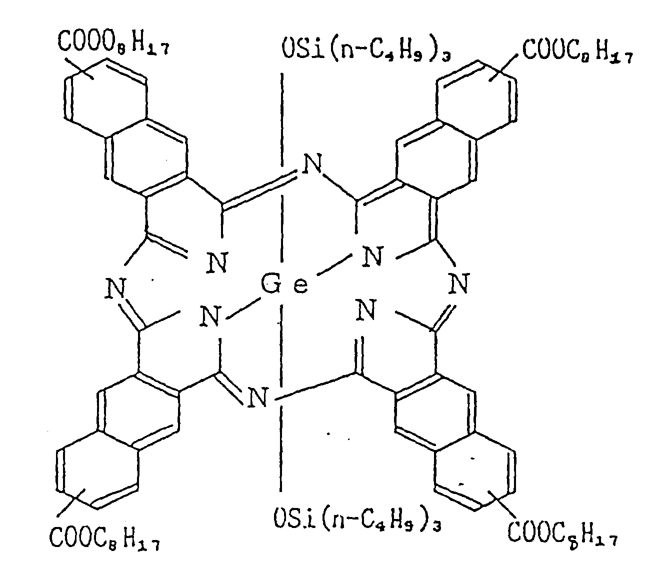

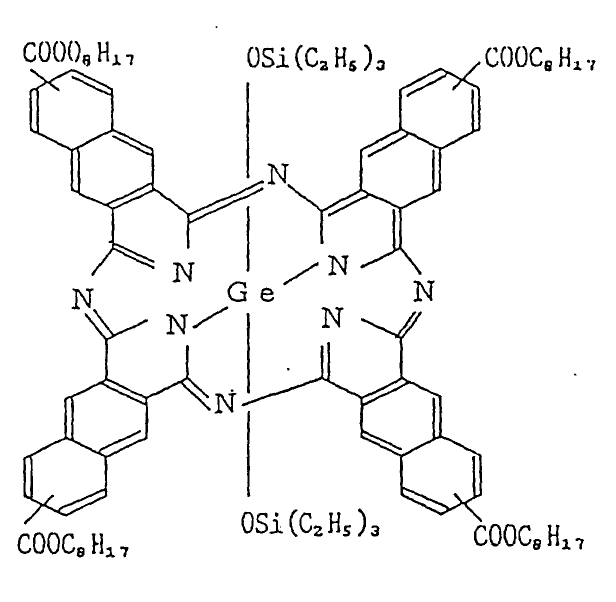

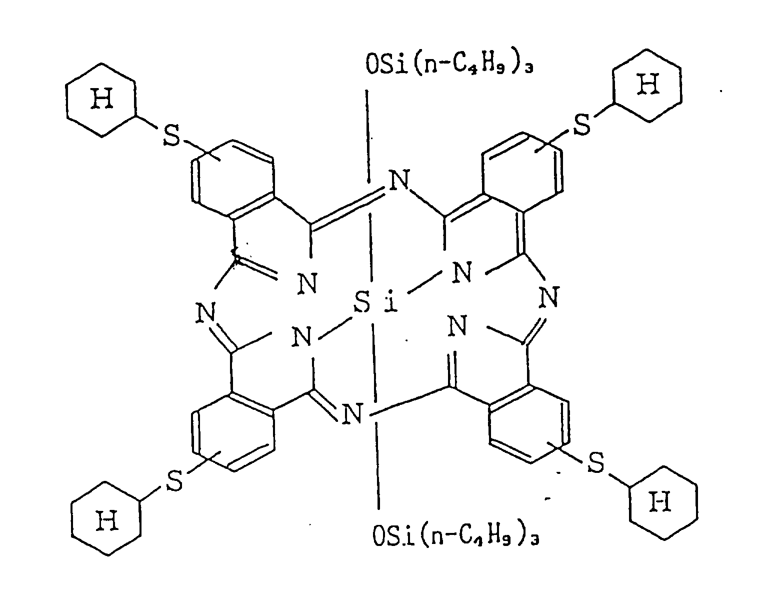

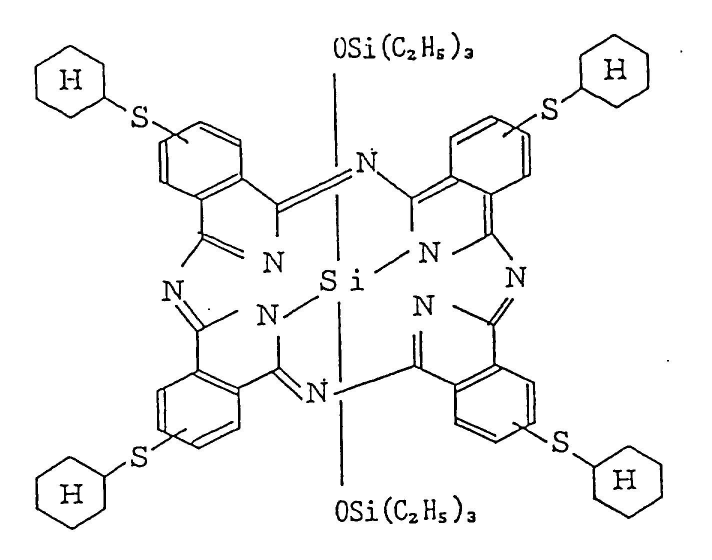

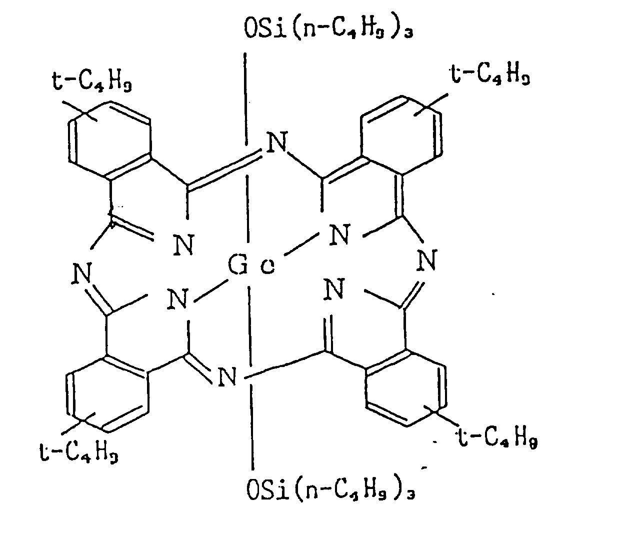

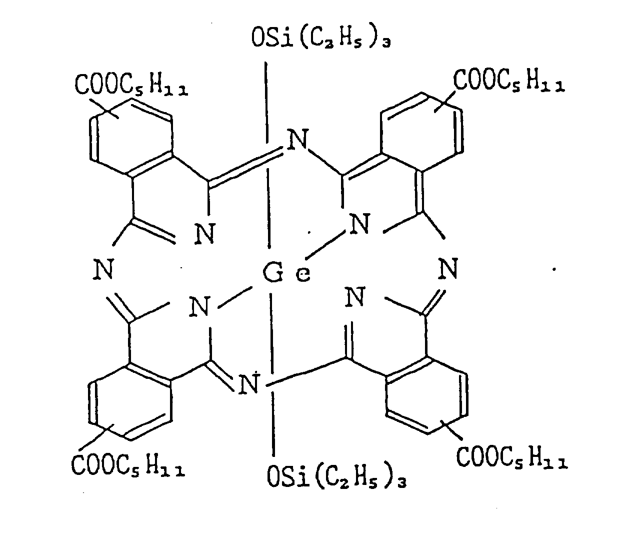

| | |
|---|---|
| Bis(tributylsiloxy)-germanium-tetra-(octyloxycarbonyl)-naphthalocyanine | P.B.T. 203 °C |
| Bis(tributylsiloxy)-silicon-tetra-(cyclohexylthio)-naphthalocyanine | P.B.T. 298 °C |
| Bis(tripropylsiloxy)-silicon-tetra-(cyclohexylthio)-naphthalocyanine | P.B.T. 290 °C |
| Bis(tributylsiloxy)-silicon-tetra-(n-butylthio)-naphthalocyanine | P.B.T. 243 °C |
| Bis(triethylsiloxy)-germanium-tetra-t-butyl-phthalocyanine | P.B.T. 272 °C |
| Bis(tributylsiloxy)-germanium-tetra-t-butyl-phthalocyanine | P.B.T. 253 °C |
| Bis(triphenylsiloxy)-silicon-phthalocyanine | P.B.T. 292 °C |
| Bis(phenoxy)-silicon-phthalocyanine | P.B.T. 281 °C. |

The content of the azaphthalocyanine derivatives, phthalocyanine derivatives and naphthalocyanine derivatives in the information recording layer is a sufficient amount for making the reflectance of the information recording layer 20 % or more.

In order to improve the durability, it has been found that the following thermal quenchers (a) to (e) are effective for relaxing damages caused by the laser beam on the recording layer formed by using an azaphthalocyanine, a phthalocyanine or a naphthalocyanine of the formula I alone:
(a) Crystalline dyes having a pyrolysis beginning temperature of 350 °C or higher.
(b) Thermal quenchers having a thermal deterioration preventing effect for azaphthalocyanine, phthalocyanine and naphthalocyanine derivatives of the formula (I).
(c) Dyes having a relaxation process for molecular excited states of azaphthalocyanine, phthalocyanine and naphthalocyanine derivatives of the formula (I).
(d) Dyes having a large heat capacity.
(e) Dyes having a high heat conductivity.

By the co-use of an azaphthalocyanine, a phthalocyanine or a naphthalocyanine of the formula I and a thermal quencher of (a) to (e) mentioned above, a continuous playback (readout) ability of 10⁵ times or more can be attained at a playback laser power of 0.5 to 1.5 mW.

The thermal quencher can also relax a molecular excited state of the azaphthalocyamine derivatives, phthalocyanine derivatives and naphthalocyanine derivatives.

The thermal quencher having a pyrolysis beginning temperature of 350 °C or higher and a function for preventing thermal deterioration is preferably a crystalline dye represented by the formula II, 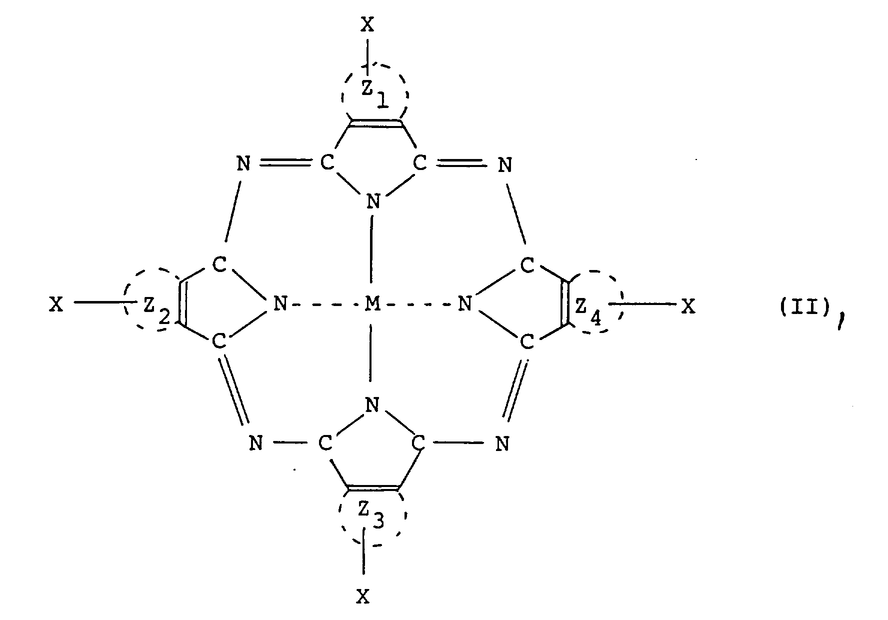 wherein M is a transition metal; and Z₁, Z₂, Z₃, Z₄ and X are as defined above.

Preferred examples of compounds of formula II are:

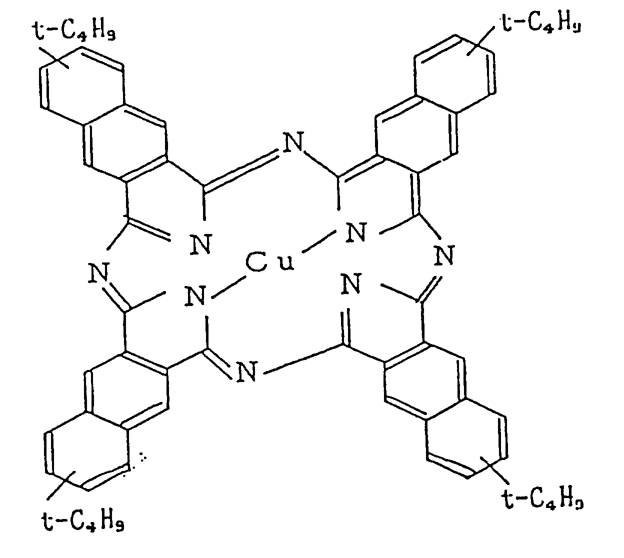

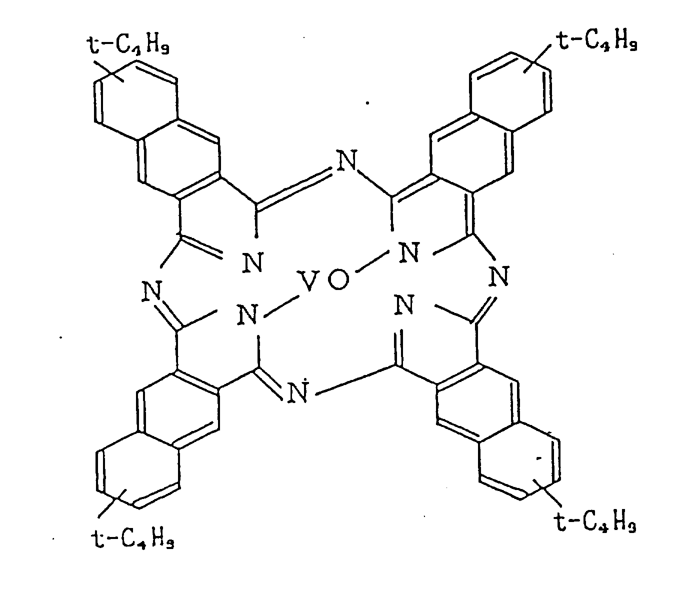

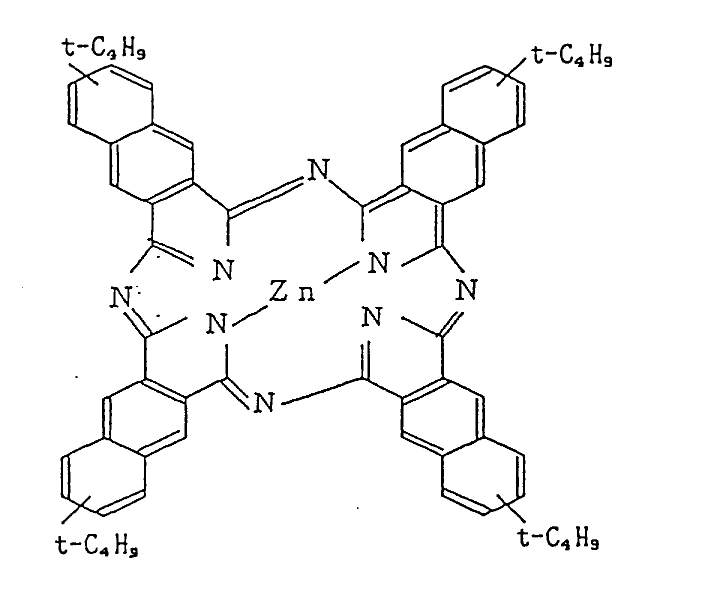

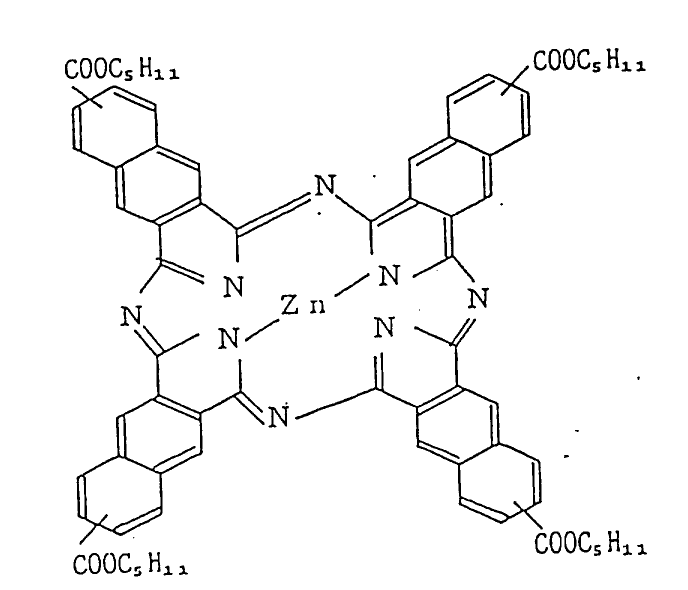

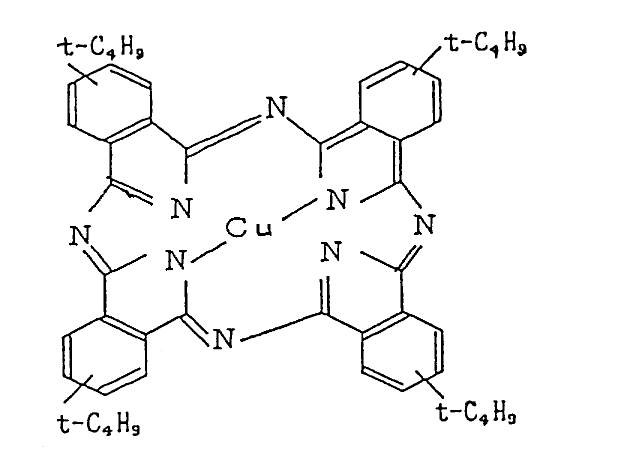

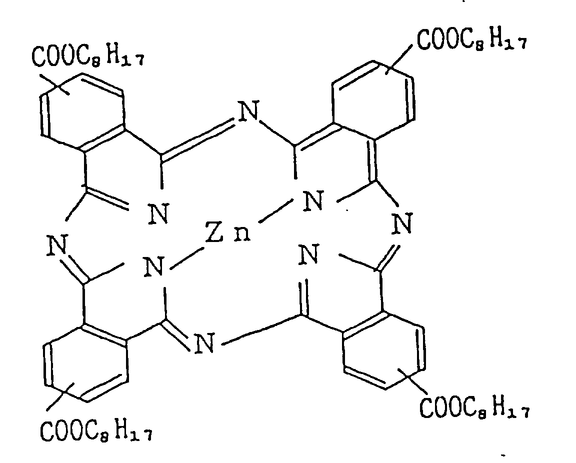

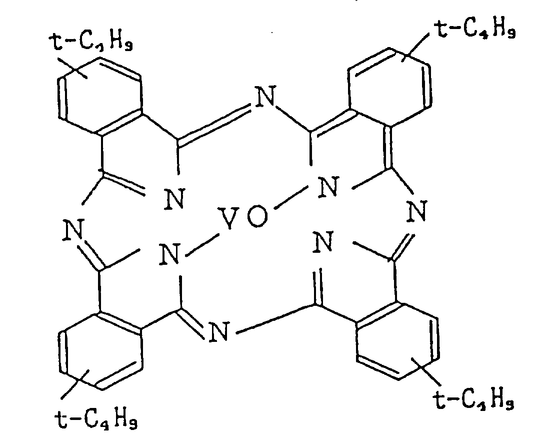

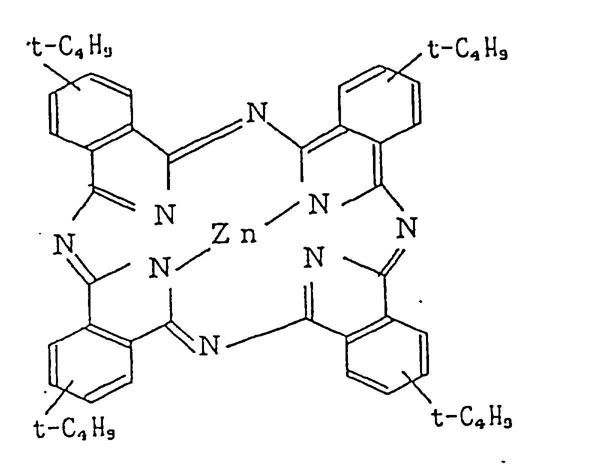

| | |
|---|---|
| Vanadyl tetra-t-butylnaphthalocyanine | P.B.T. 372 °C |
| Copper tetra-t-butylnaphthalocyanine | P.B.T. 364 °C |
| Zinc tetra-t-butylnaphthalocyanine | P.B.T. 380 °C |
| Palladium tetra-t-butylnaphthalocyanine | P.B.T. 365 °C |
| Palladium tetra-t-butylphthalocyanine | P.B.T. 370 °C |
| Copper tetra-t-butylphthalocyanine | P.B.T. 386 °C |
| Zinc tetra-t-butylphthalocyanine | P.B.T. 369 °C |

In order to achieve an excellent readout light stability (durability), reflectance and solubility in a solvent, the following combinations, for example, are preferred:

A combination of 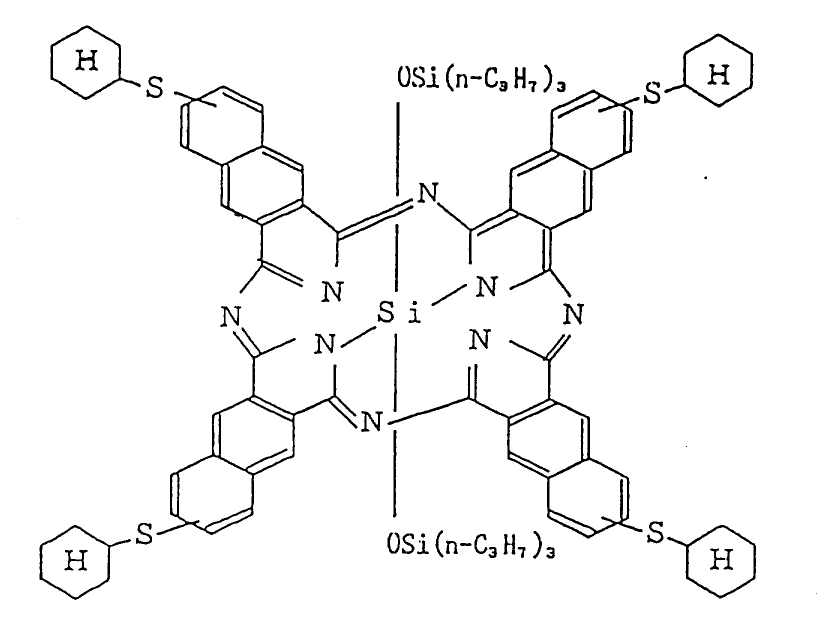 and

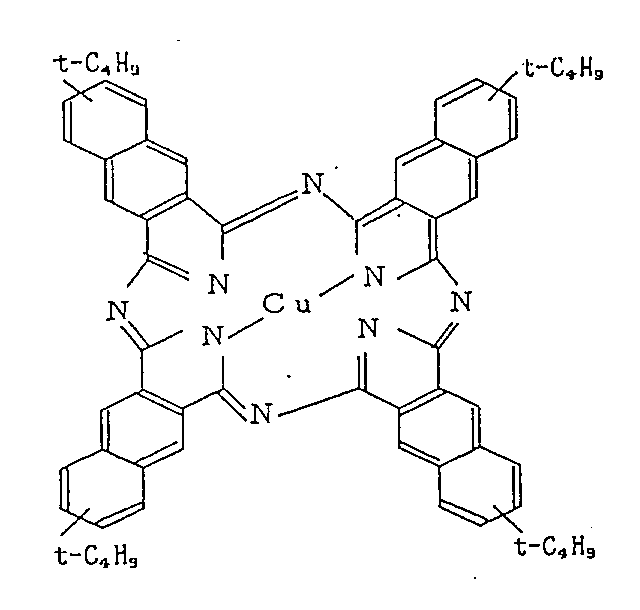

A combination of bis(tributylsiloxy)-germanium-tetra-(octyloxycarbonyl)-naphthalocyanine and copper tetra-t-butylnaphthalocyanine.

A combination of bis(triethylsiloxy)-germanium-tetra-(octyloxycarbonyl)-naphthalocyanine and copper tetra-t-butylnaphthalocyanine.

A combination of bis(tributyloxy)-silicon-tetra-(cyclohexylthio)-naphthalocyanine and zinc t-butylnaphthalocyanine.

A combination of bis(tripropyloxy)-silicon-tetra-(cyclohexylthio)-naphthalocyanine and vanadyl tetra-t-butylnaphthalocyanine.

A combination of bis(tripropyloxy)-silicon-tetra-(cyclohexylthio)-naphthalocyanine and lead tetra-t-butylnaphthalocyanine.

A combination of bis(tributylsiloxy)-silicon-tetra-(n-butylthio)-naphthalocyanine and palladium tetra-t-butylnaphthalocyanine.

A combination of bis(tributylsiloxy)-germanium-tetra-(t-butyl)-phthalocyanine and palladium tetra-t-butylphthalocyanine.

A combination of bis(triethylsiloxy)-germanium-tetra-t-butyl-phthalocyanine and copper tetra-t-butylphthalocyanine.

A combination of bis(triethylsiloxy)-germanium-tetra-t-butyl-phthalocyanine and zinc tetra-t-butyl-phthalocyanine.

By the combination of two or more organic dyes having different chemical structures, and specifically by the combination of (i) an organic dye having a pyrolysis beginning temperature of 300 °C or lower and selected from derivatives of azaphthalocyanine, phthalocyanine and naphthalocyanine of the formula I and (ii) a thermal quencher having a pyrolysis beginning temperature of 350 °C or higher, a readout ability of 10⁵ times or more can be attained at a playback readout power of 0.5 to 1.5 mW.

The organic dye having a pyrolysis beginning temperature of 300 °C or lower and selected from derivatives of azaphthalocyanine, phthalocyanine and naphthalocyanine of the formula I and the thermal quencher having a pyrolysis beginning temperature of 350 °C or higher are preferably mixed in a range of a mass ratio of the former to the latter of 1/0.01 to 1/1.5. Further, a mixing ratio so as to make the reflectance of the information recording layer 20 % or more is preferable.

As the material for forming the substrate, there can be used thermoplastic resins and thermosetting resins such as polyvinyl chloride resins, acrylic resins, polyolefin resins, polycarbonate resins, polyvinyl acetal resins, unsaturated polyester resins, vinyl ester resins, polystyrene resins, polyether sulfone resins, polyether ether ketone resins, epoxy resins, allyl resins, polyimides, polyamide resins, etc.; inorganic polymers such as silicone resins, phosphazene resins, etc.; glass, SiO₂, Si₃N₄, metals, etc. These material are formed into films, sheets, cylinders, prisms (trigonal or higher), etc.

Since the substrate is subjected to repeated writing and readout of signals, it is preferable that the substrate has a light transmittance of 85 % or more and a small optical anisotropy. Depending on the material used, there can be used a structure obtained by laminating a photocurable resin on a mirror-like surface of the substrate or on a substrate surface having a guiding groove pattern (pregroove) and transcribing the guiding groove pattern on the surface of the photocurable resin layer.

The film thickness of the information recording layer formed on the substrate is preferably in the range of 10 to 500 nm and particularly in the range of 10 to 200 nm. However, in the case of an optical information recording medium containing a compound which slightly shifts the absorption wavelength of the information recording layer against the laser wavelength, the interference effect of reflectance depending on the film thickness is large. Thus, it is preferable to use a film thickness region which makes the reflectance large. It is preferable to use a first interference film thickness of 30 to 80 nm wherein the reflectance is large and the absorption is small.

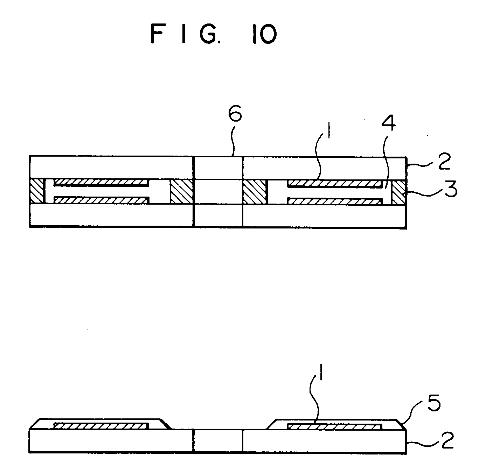

The optical information recording medium in the form of sheet or disc of the present invention may further contain a reflective layer, a protective layer, etc., as conventionally used. Fig. 10 is a cross-sectional view showing one example of the optical informaion recording medium of the present invention comprising an information recording layer or film 1, a substrate 2, a spacer 3, an air gap 4, a protective film 5, and a central hole 6.

The thus constructed optical information recording medium is exposed to a laser beam to record information by forming pits on the exposed portions by melting or sublimation. At the time of readout (or playback), the laser beam power is controlled to a predetermined weak level so as not to damage the recording layer. Thus, there takes place no thermal deformation of the pit form even if exposed to playback light 10⁵ times or more.

As the laser beam, there can be used various laser beams of N₂, He-Ne, Ar, dye, semiconductor, lasers, etc., depending on the absorption wavelength of the information recording layer.

For example, in the case of forming the information recording layer with a napthalocyanine mixture of formulae (I) and (II), a semiconductor laser of 780 to 830 nm can be used for recording and readout. In the case of forming the information recording layer with an azaphthalocyanine, a phthalocyanine, a naphthalocyanine or a mixture thereof, a semiconductor laser of 670 to 710 nm can be used for recording and readout. In these cases, the playback light can be used at a power level of 0.5 to 1.5 mW. Further, in the case of using an azaphthalocyanine, a naphthalocyanine or a mixture thereof, it is preferable to control the mixing ratio so as to make the reflectance of the information recording layer from the substrate side 20 % or more.

The optical information recording medium can contain in the information recording layer a compound which can shift the maximum absorption wavelength of the information recording layer against the laser wavelength used to the shorter wavelength side by 20 to 100 nm. Further the light absorption rate of the information recording layer can preferably be in the range of 1 to 20 % of the laser beam used. The recording medium can record and read out signals by the information recording layer without further forming a reflective layer. In addition, the information recording layer preferably has a thickness in the range of making the reflectance larger by applying an interference effect of light.

The optical information recording medium can be produced, for example, as follows.

One process comprises dissolving an organic dye having a pyrolysis beginning temperature of 300 °C or less and selected from derivatives of azaphthalocyanine, phthalocyanine and naphthalocyanine, and a thermal quencher having a pyrolysis beginning temperature of 350 °C or higher in an organic solvent to give a solution of 0.1 to 5 % by mass, dipping a substrate in the solution, picking up the substrate, and removing the solvent to produce the desired optical information recording medium.

Another process comprises dissolving an organic dye having a pyrolysis beginning temperature of 300 °C or less, and selected from derivatives of azaphthalocyanine, phthalocyanine and naphthalocyanine, and a thermal quencher having a pyrolysis beginning temperature of 350 °C or higher in an organic solvent to give a solution of 0.1 to 5 % by mass, applying the solution on a substrate revolving at 1000 to 5000 r.p.m. to form a film, and removing the solvent to form a recording layer of 10 to 200 nm in thickness on the substrate to produce the desired optical information recording medium.

More concretely, two or more organic dyes for forming the information recording layer are coated on the substrate using a spin coating, spray coating or dip coating apparatus as conventionally used to form thin films. For example, an azaphthalocyanine, a phthalocyanine or a naphthalocyanine of the formula I together with a thermal quencher is dissolved in an organic solvent or dispersed in an solvent, if necessary, together with a binder, followed by coating on the substrate.

As the binder, there can be used polymers such as polyimides, polyamides, polystyrenes, acrylic resins, silicone resins, epoxy resins, phenolic resins, etc.

As the organic solvent, there can be used aromatic compounds such as benzene, xylene, toluene, etc.; ketones such as methyl ethyl ketone, etc.; ethers; halogenated compounds such as chloroform, carbon tetrachloride, etc.; and saturated hydrocarbons, etc., or mixtures thereof. Among them, the use of carbon tetrachloride and a mixture of methylcyclohexane and toluene is preferable.

It has been found in connection with the present invention that the pyrolysis beginning temperatures of the azaphthalocyanines, phthalocyanines and naphthalocyanines of formula I are 300 °C or lower. On the other hand, when a semiconductor laser beam of 1 mW or more is irradiated on a recording film, the irradiated surface of the film formed with an azaphthalocyanine, a phthalocyanine, or a naphthalocyanine of the formula I alone becomes 300 °C or higher. Therefore, the recording layer obtained by using an azaphthalocyanine, a phthalocyanine or a naphthalocyanine of the formula I alone cannot withstand sufficiently a laser beam of 1 mW or more (wavelength 830 nm), which seems to result in lowering the durability (readout light stability).

The present invention further provides a playback apparatus suitable for the optical information recording medium mentioned above.

The present invention is illustrated by way of the following examples, in which all percent values and ratios of products are by mass unless otherwise specified.

### Example 1

On a polycarbonate substrate of 1.2 nm thickness, a 0.5 % solution obtained by dissolving bis(tributylsiloxy)-germanium-tetra-(octyloxycarbonyl)-naphthalocyanine and copper tetra-t-butylnapthalocyanine in a ratio of 1:0.8 in carbon tetrachloride was spin coated to form a recording layer of 45 nm thickness. The reflectance of the recording layer of the resulting recording medium from the substrate side at a wavelength of 830 nm was 28 %.

Further, on the recording medium, output light of a laser diode of 830 nm in wavelength was focused in a spot diameter of 1.2 µm, and a signal of a recording frequency of 1 MHz was written from the substrate side at a linear speed of 8.0 m/s and an output power of 9 mW. Then, readout was conducted with playback light of 1.0 mW to give a playback carrier-tonoise (C/N) ratio of 46 dB.

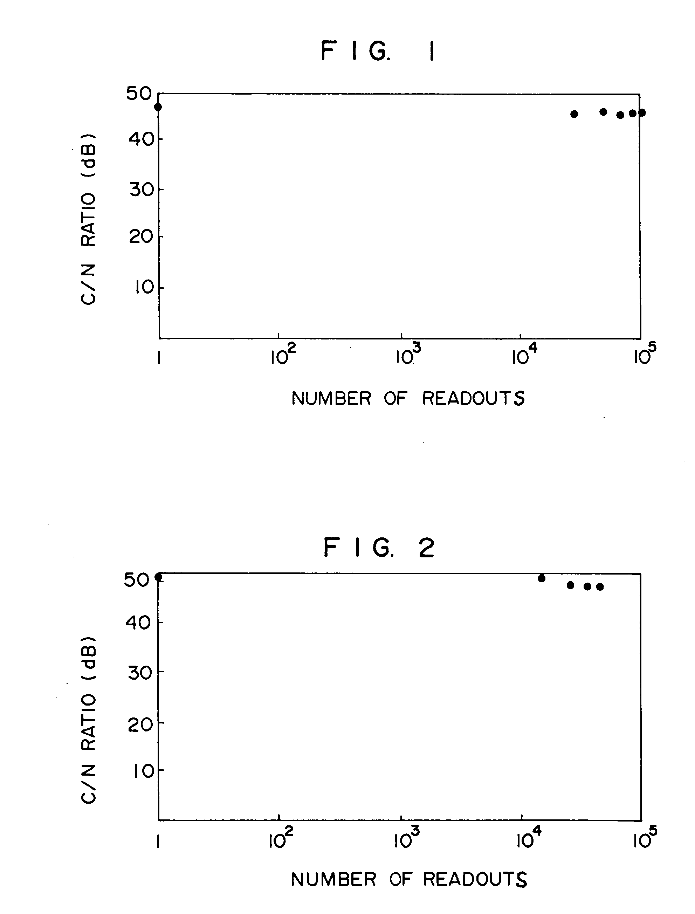

The number of readouts by irradiating playback light of 1.0 mW continuously is shown in Fig. 1.

### Example 2

On a polycarbonate substrate of 1.2 mm thickness, a 0.5 % solution obtained by dissolving bis(triethylsiloxy)-germanium-tetra-(octyloxycarbonyl)-naphthalocyanine and copper tetra-t-butylnaphthalocyanine in a ratio of 1:0.75 in carbon tetrachloride was spin coated to form a recording layer of 43 nm thickness. The reflectance of the recording layer of the resulting recording medium from the substrate side was 32 %.

Further, on the recording medium, output light of a laser diode of 830 nm in wavelength was focused in a spot diameter of 1.2 µm, and a signal of a recording frequency of 1 MHz was written from the substrate side at a linear speed of 8.0 m/s and an output power of 9 mW. Then, readout was conducted with playback light of 1.0 mW to give a playback C/N ratio of 50 dB.

The number of readouts by irradiating playback light of 1.0 mW continuously is shown in Fig. 2.

### Comparative Example 1

On a polycarbonate substrate of 1.2 mm thickness, a 1.0 % solution obtained by dissolving bis(tributylsiloxy)-germanium-tetra-(octyloxycarbonyl)-naphthalocyanine in carbon tetrachloride was spin coated to form a recording layer of 53 nm. The reflectance of the recording layer of the resulting recording medium from the substrate side at a wavelength of 80 nm was 38 %.

Further on the recording medium, output light of a laser diode of 830 nm in wavelength was focused in a spot diameter of 1.2 µm, and a signal of a recording frequency of 1 MHz was written from the substrate side at a linear speed of 8.0 m/s and an output power of 9 mW. Then, readout was conducted with playback light of 1.0 mW to give a playback C/N ratio of 42 dB.

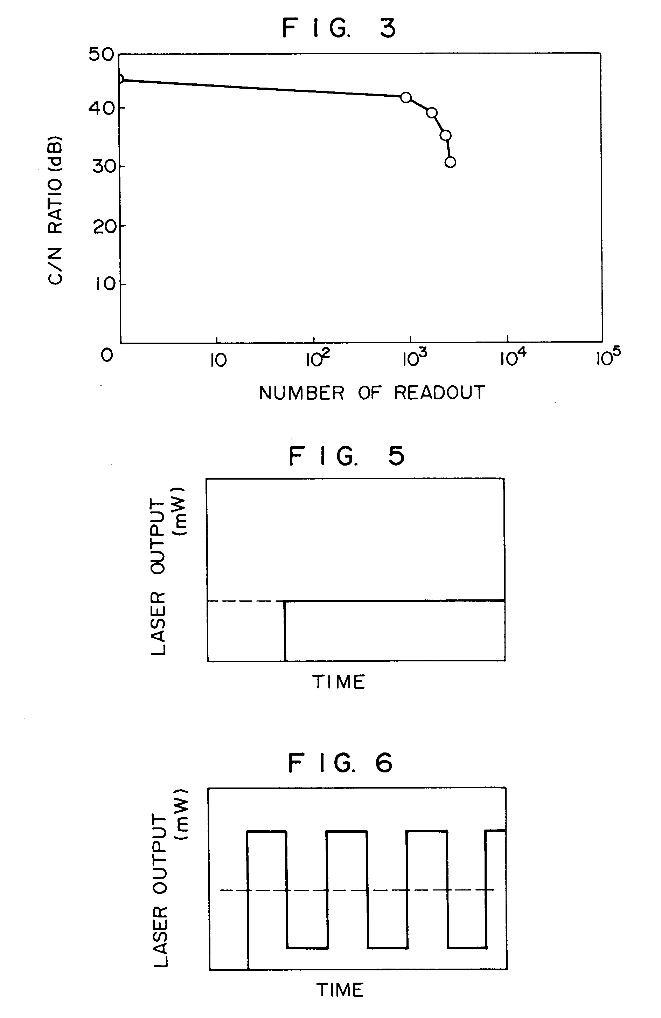

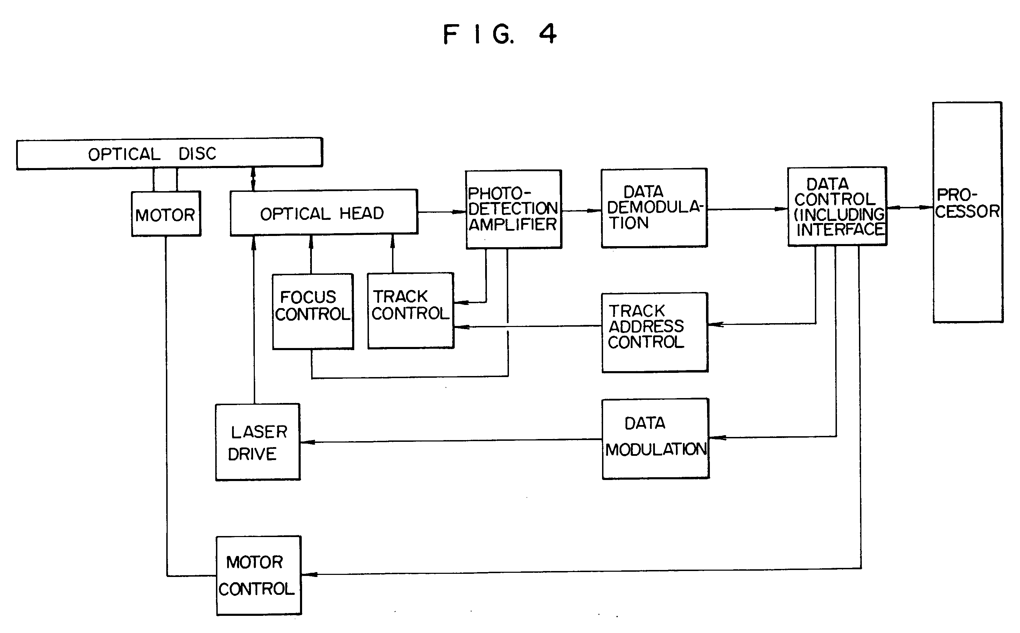

The readout light stability by changing the power of playback light is shown in Fig. 3. In this case, the recording medium was deteriorated at a playback light power of 1.0 mW.

### Example 3

On a polycarbonate substrate of 1.2 mm thickness, a 1.0 % solution obtained by dissolving bis(tributyloxy)-silicon-tetra-(cyclohexylthio)-naphthalocyanine and zinc tetra-t-butylnaphthalocyanine in a ratio of 1:0.8 in carbon tetra-chloride was spin coated to form a recording layer of 55 nm thickness. The reflectance of the recording layer of the resulting recording medium from the substrate side at a wavelength of 830 nm was 37 %.

Further, on the recording medium, output light of laser diode of 830 nm in wavelength was focused in a spot diameter of 1.2 µm, and a signal of a recording frequency of 1 MHz was written from the substrate side at a linear speed of 8.0 m/s and an output power of 9 mW. Then, readout was conducted with playback light of 1.0 mW to give a playback C/N ratio of 49 dB.

The number of readouts by irradiating playback light of 1.0 mW continuously was 10⁵ or more.

### Example 4

On a polycarbonate substrate of 1.2 mm thickness, a 0.8 % solution obtained by dissolving bis(tripropylsiloxy)-silicon-tetra-(cyclohexylthio)-naphthalocyanine and vanadyl tetra-t-butylnaphthalocyanine in a ratio of 1:0.8 in carbon tetrachloride was spin coated to form a recording layer of 49 nm thickness. The reflectance of the recording layer of the resulting recording medium from the substrate side at a wavelength of 830 nm was 35 %.

Further, on the recording medium, output light of a laser diode of 830 nm in wavelength was focused in a spot diameter of 1.2 µm, and a signal of a recording frequency of 1 MHz was written from the substrate side at a linear speed of 8.0 m/s and an output power of 9 mW. Then, readout was conducted with playback light of 1.0 mW to give a playback C/N ratio of 51 dB.

The number of readouts by irradiating playback light of 1.0 mW continuously was 10⁵ or more.

### Example 5

On a polycarbonate substrate of 1.2 mm thickness a 1.0 solution obtained by dissolving bis(tripropylsiloxy)-silicon-tetra-(cyclohexylthio)-naphthalocyanine and zinc tetra-t-butylnaphthalocyanine in a ratio as shown in Table 1 in carbon tetrachloride was spin coated to form a recording layer having a thickness as shown in Table 1.

The reflectance of the recording layer was also examined as described in Example 1 and is shown in Table 1.

The playback C/N ratio and the number of readouts by irradiating playback light of 1.0 mW continuously were also examined in the same manner as described in Example 4 and are shown in Table 1.

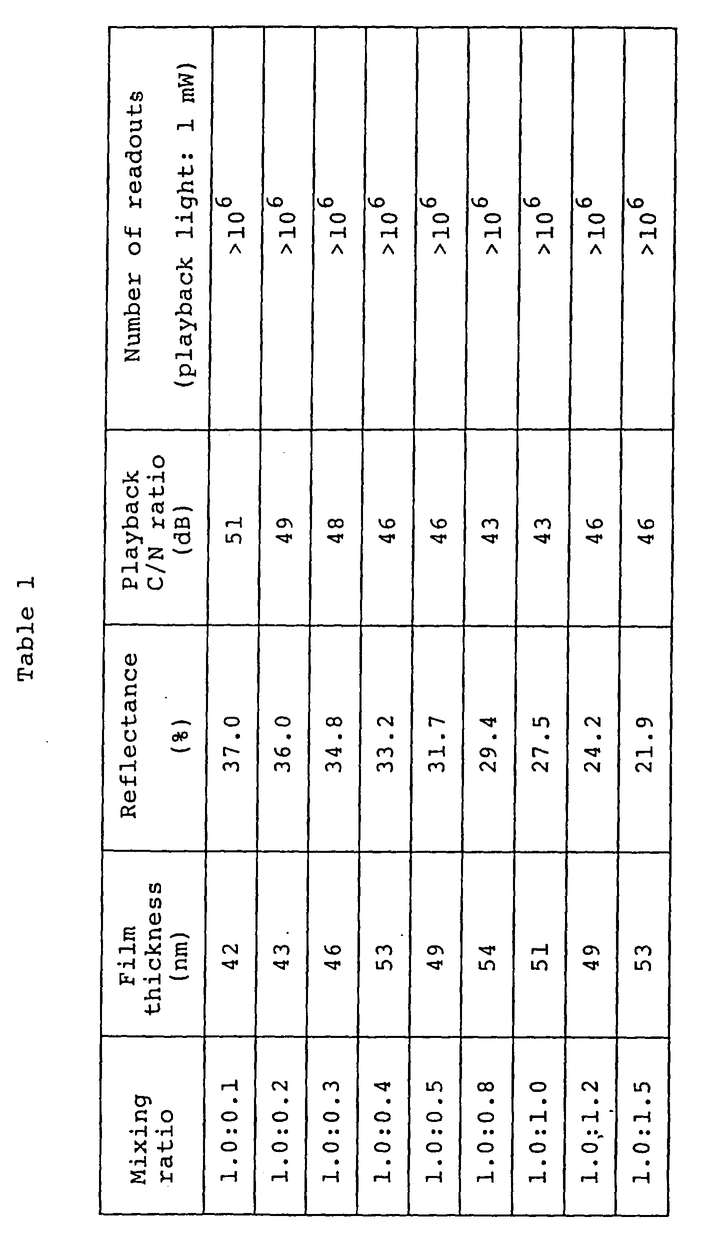

As is clear from Table 1, good playback C/N ratios and readout light stability are obtained for the individual mixing ratios.

However, when the mixing ratio was more than 1:1.5, the reflectance became 20 % or less, resulting in failing to detect the playback C/N ratio and readout light stability.

### Example 6

On a polycarbonate substrate of 1.2 mm thickness, a 1.2 % solution obtained by dissolving bis(tributylsiloxy)-silicon-tetra-(n-butylthio)-naphthalocyanine and vanadium tetra-t-butylnaphthalocyanine in a ratio of 1:0.8 in carbon tetrachloride was spin coated to form a recording layer of 52 nm thickness. The reflectance of the recording layer of the resulting recording medium from the substrate side at a wavelength of 830 nm was 33 %.

Further, on the recording medium, output light of a laser diode of 830 nm in wavelength was focused in a spot diameter of 1.2 µm, and a signal of a recording frequency of 1 MHz was written from the substrate side at a linear speed of 8.0 m/s and an output power of 9 mW. Then, readout was conducted with playback light of 1.0 mW to give a playback C/N ratio of 46 dB.

The number of readouts by irradiating playback light of 1.0 mW continuously was 10⁵ or more.

### Example 7

On a polycarbonate substrate of 1.2 mm thickness a 0.8% soltuion obtained by dissolving bis(tributylsiloxy)-germanium-tetra-(t-butyl)-phthalocyanine and palladium tetra-t-butylphthalocyanine in a ratio of 1:0.8 in carbon tetrachloride was spin coated to form a recording layer of 46 nm thickness. The reflectance of the recording layer of the resulting recording medium from the substrate side at a wavelength of 690 nm was 31%.

Further, on the recording medium, output light of a laser diode of 690 nm in wavelength was focused in a spot diameter of 1.2 µm, and a signal of a recording frequency of 1 MHz was written from the substrate side at a linear speed of 8.0 m/s and an output power of 6 mW. Then, readout was conducted with playback light of 1.0 mW to give a playback C/N ratio of 43 dB.

The number of readouts by irradiating playback light of 1.0 mW continuously was 10⁵ or more.

### Example 8

On a polycarbonate substrate of 1.2 mm thickness, a 1.0 % solution obtained by dissolving bis(triethylsiloxy)-germanium-tetra-(t-butyl)-phthalocyanine and copper tetra-t-butyl-phthalocyanine in a ratio of 1:0.8 in carbon tetrachloride was spin coated to form a recording layer of 45 nm thickness. The reflectance of the recording layer of the resulting recording medium from the substrate side at a wavelength of 690 nm was 29 %.

Further, on the recording medium, output light of a laser diode of 690 nm in wavelength was focused in a spot diameter of 1.2 µm, and a signal of a recording frequency of 1 MHz was written from the substrate side at a linear speed of 8.0 m/s and an output power of 6 mW. Then, readout was conducted with playback light of 1.0 mW to give a playback C/N ratio of 44 dB.

The number of readouts by irradiating playback light of 1.0 mW continuously was 10⁵ or more.

### Example 9

On a polycarbonate substrate of 1.2 mm thickness, a 1.0 % solution obtained by dissolving bis(triethylsiloxy)-germanium-tetra-(t-butyl)-phthalocyanine and zinc tetra-t-butyl-phthalocyanine in a ratio as shown in Table 2 in carbon tetrachloride was spin coated to form a recording layer having a thickness as shown in Table 2.

The reflectance of the recording layer was also examined as described in Example 8 and is shown in Table 2.

The playback C/N ratio and the number of readouts by irradiating playback light of 1.0 mW continuously were also examined in the same manner as described in Example 8 and are shown in Table 2.

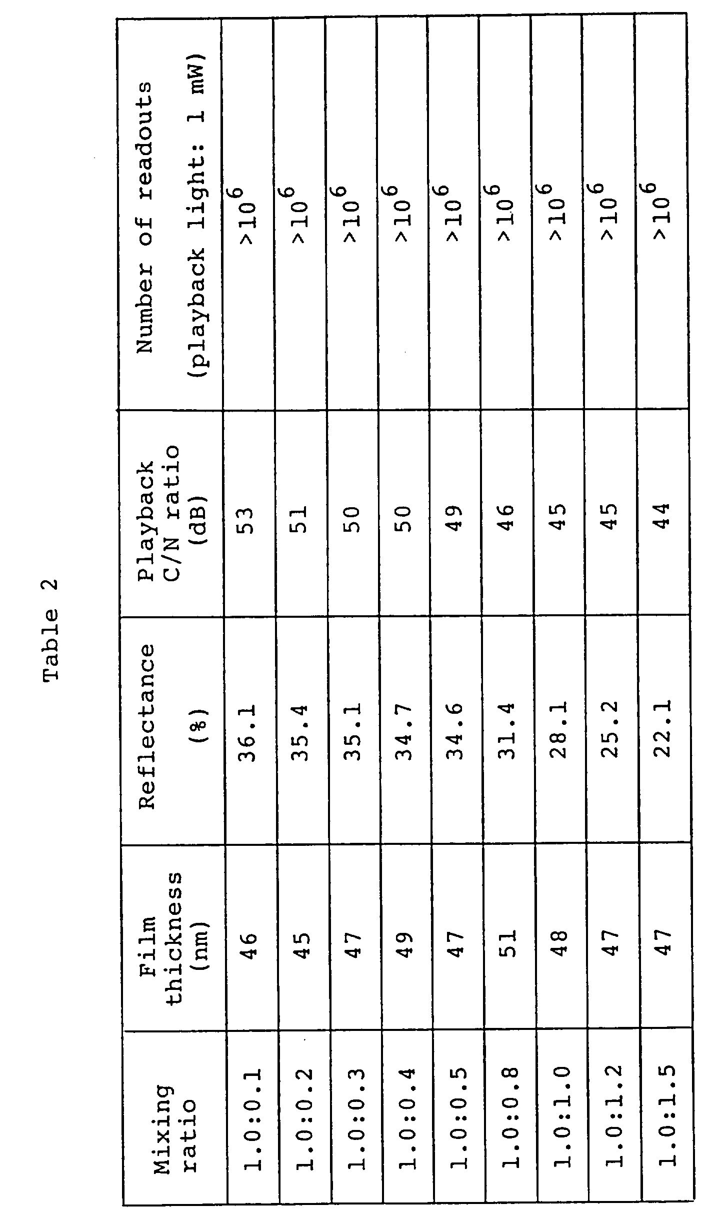

As is clear from Table 2, good playback C/N ratios and readout light stability are obtained for the individual mixing ratios.

However, when the mixing ratio was more than 1:1.5, the reflectance became 20 % or less, resulting in failing to detect the playback C/N ratio and readout light stability.

### Example 10

Using a recording playback apparatus as shown in Fig. 4, the readout light stability of the recording medium obtained in Example 1 was evaluated, while applying the laser output of readout light as shown in Fig. 5. As a result, the number of readouts when continuously irradiated by playback light of 1.0 mW was 10⁵ or more.

### Example 11

Using the same optical system as used in Example 10, the readout light stability of the recording medium obtained in Example 1 was evaluated, while applying the laser output of readout light as shown in Fig. 6. As a result, the number of readouts when continuously irradiated by playback light of 1.0 mW was 10⁵ or more.

### Example 12

A recording medium was produced by vacuum depositing bis(triphenylsiloxy)-silicon-phthalocyanine at a vacuum of 6.7 x 10⁻⁶ torr on a polycarbonate substrate of 130 mm in diameter and 1.2 mm in thickness with guiding grooves, the temperature of the substrate being not particularly controlled but allowed to stand, to give a recording layer of 80 nm thickness.

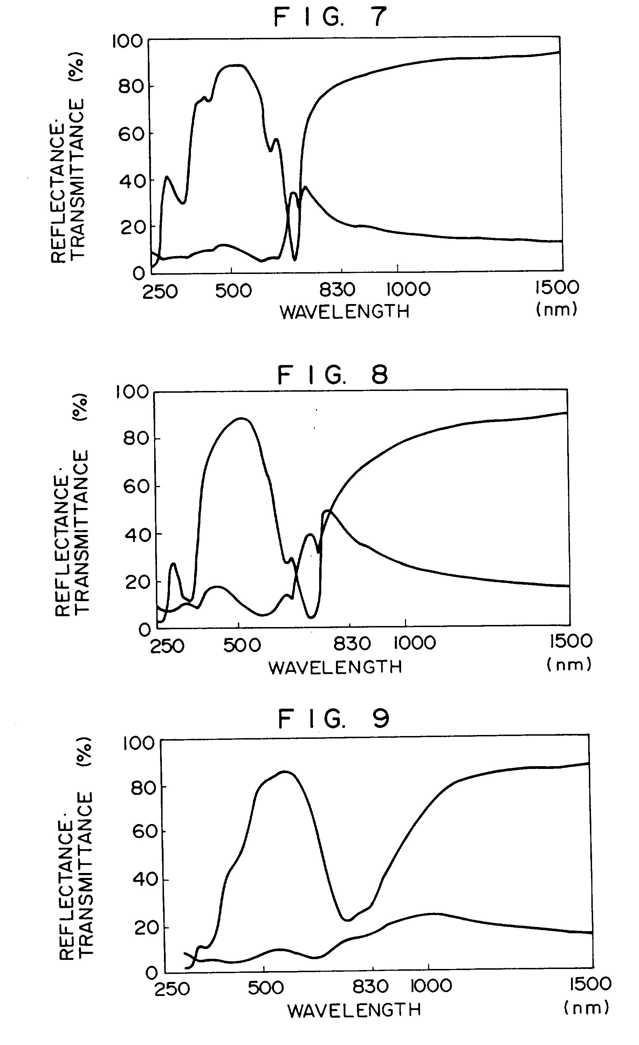

Spectroscopic properties (reflectance and transmittance) of the resulting recording layer are shown in Fig. 7. The maximum absorption was 690 nm.

Further, on the recording medium, output light of a laser diode of 780 nm in wavelength (difference from maximum absorption: 90 nm) was focused in a spot diameter of 1.2 µm, and a signal of a recording frequency of 1 MHz was written from the substrate side at a linear speed of 8.0 m/s and an output power of 9 mW. The absorption rate at a wavelength of 780 nm was 4.1 %. After recording, readout was carried out using playback light of 1.0 mW. The playback C/N ratio was 46 dB. The number of readouts at a readout light of 1.0 mW was 10⁵ or more. This means that the recording medium is excellent in readout light stability.

Further, when copper tetra-t-butylphthalocyanine was mixed with bis(triphenylsiloxy)-silicon-phthalocyanine, the resulting recording medium was improved in the readout light stability compared with the recording medium using bis(triphenylsiloxy)-silicon-phthalocyanine alone.

### Comparative Example 2

Using the same recording medium as used in Example 12, output light of a laser diode of 830 nm in wavelength (difference from the maximum absorption: 140 nm) was focused in a spot diameter of 1.2 µm, and a signal of a recording frequency of 1 MHz was written from the substrate side at a linear speed of 8.0 m/s and an output power of 9 mW. However, since the absorption rate at a wavelength of 830 nm was as small as 0.8 %, there was shown no recording sensitivity.

### Comparative Example 3

A recording medium was produced by vacuum depositing bis(phenoxy)-silicon-phthalocyanine on a polycarbonate substrate of 130 nm in diameter and 1.2 mm in thickness with guiding grooves in the same manner as described in Example 12 to give a recording layer of 92 nm thickness.

Spectroscopic properties of the resulting recording layer are shown in Fig. 8. The maximum absorption was 720 nm.

Then, output light of a semiconductor laser of 830 nm in wavelength (difference from the maximum absorption: 110 nm) was focused in a spot diameter of 1.2 µm, and a signal of a recording frequency of 1 MHz was written from the substrate side at a linear speed of 8.0 m/s and an output power of 9 mW. However, since the absorption rate at a wavelength of 830 nm was as small as 0.8 %, there was shown no recording sensitivity.

### Comparative Example 4

Vanadyl-tetra-(t-butyl)-naphthalocyanine was synthesized according to the method disclosed in Zhurnal Obschei Khimii, vol. 42, p. 696 (1972).

A 1.5 % chloroform solution of this compound was prepared and coated on a glass substrate of 1.2 mm thickness by spin coating to form a recording layer of 78 nm thickness. The spectroscopic properties of the recording layer of the resulting recording medium are shown in Fig. 9.

Recording playback properties using a semiconductor laser of 830 nm in wavelength were tried to evaluate, but the reflectance was too small to measure the focusing and tracking. Thus, the C/N ratio could not be measured.

### Example 13

On a polycarbonate substrate of 1.2 mm thickness, a solution obtained by dissolving bis(tributylsiloxy)-silicon-tetra-(trimethylsilyl)-naphthalocyanine and copper tetra-t-butylnaphthalocyanine in a ratio of 1:0.8 in carbon tetrachloride was spin coated to form a recording layer of 48 nm thickness. The reflectance of the recording layer of the resulting recording medium from the substrate side was 37 %.

Further, on the recording medium, output light of a laser diode of 830 nm in wavelength was focused in a spot diameter of 1.2 µm, and a signal of a recording frequency of 1 MHz was written from the substrate side at a linear speed of 8.0 m/s and an output power of 9 mW. Then, readout was conducted with playback light of 1.0 mW to give a playback C/N ratio of 51 dB.

The number of readouts by irradiating playback light of 1.0 mW was 10⁵ or more.

As mentioned above, the optical information recording medium of the present invention can be advantageously produced by spin coating or dip coating e.g. a mixture of (i) an azaphthalocyanine, phthalocyanine, or naphthalocyanine derivative and (ii) a thermal quencher on a substrate.

Further, the obtained thin film of the recording layer shows excellent readout light stability of 10⁵ or more at a readout laser power of 0.5 to 1.5 mW. Therefore, the optical information recording medium of the present invention can suitably be used as a write-once optical recording medium.

## Claims

1. Optical information recording medium comprising a substrate and an information recording layer formed on the substrate, the information recording layer comprising at least two organic dyes having different chemical structures,
characterized in that
at least one of the organic dyes having different chemical structure is an organic dye having a pyrolysis beginning temperature of 300 °C or less and is selected from derivatives of azaphthalocyanine, phthalocyanine and naphthalocyanine, and another of the organic dyes is a thermal quencher having a pyrolysis beginning temperature of 350 °C or higher and a function for preventing thermal deterioration,
and the information recording medium has a continuous playback or readout ability of 10⁵ times or more at a playback laser power of 0.5 to 1.5 mW.

2. Optical information recording medium according to claim 1, characterized in that the information recording layer comprises (i) at least one organic dye of the formula I 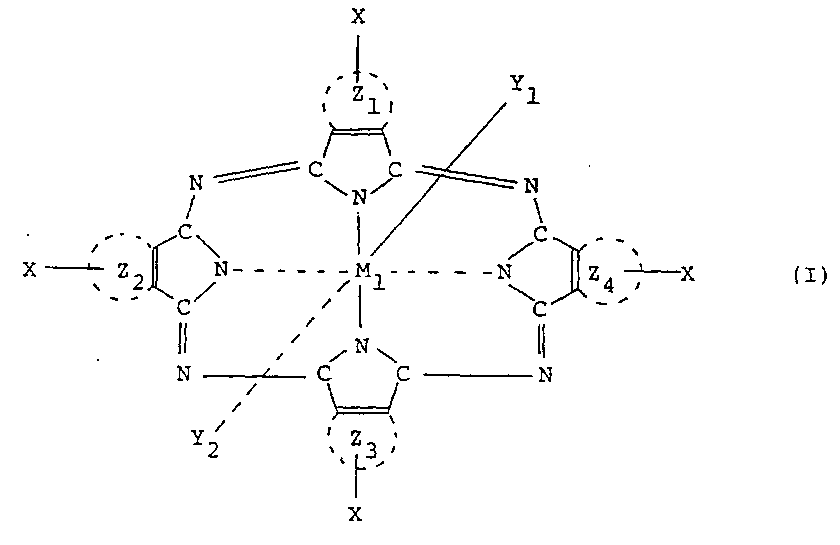 wherein M₁ is a metal atom selected from Si, Ge and Sn belonging to the group IV of the periodic table; Z₁, Z₂, Z₃ and Z₄ are independently a pyridine ring, a benzene ring or a naphthalene ring non-substituted or having one or more monovalent substituents -X, where X is an alkyl group, an alkenyl group, an alkylthio group, a phenyl group, an acyl group or a trisubstituted silyl group; Y₁ and Y₂ are independently -AR, -OR, -OAr, -OSi ( R)₃, -OSi ( OR)₃, -OSi(OAr)₃ or -OC(C₆H₅)₃, wherein R is a straight- or branched chain alkyl group, and Ar is a phenyl group, a substituted phenyl group, a benzyl group or a substituted benzyl group.

3. Optical information recording medium according to claim 2, characterized in that the content of the azaphthalocyanine derivatives, phthalocyanine derivatives and/or naphthalocyanine derivatives is sufficiently high for making the reflectance of the information recording layer 20 % or more.

4. Optical information recording medium according to one of claims 1 to 3, characterized in that the thermal quencher is a substance which can relax a molecular excited state of the azaphthalocyanine derivatives, phthalocyanine derivatives and/or naphthalocyanine derivatives.

5. Optical information recording medium according to one of claims 1 to 4, characterized in that the thermal quencher is a crystalline dye.

6. Optical information recording medium according to one of claims 1 to 5, characterized in that it comprises as the thermal quencher (ii) at least one organic dye of the formula II 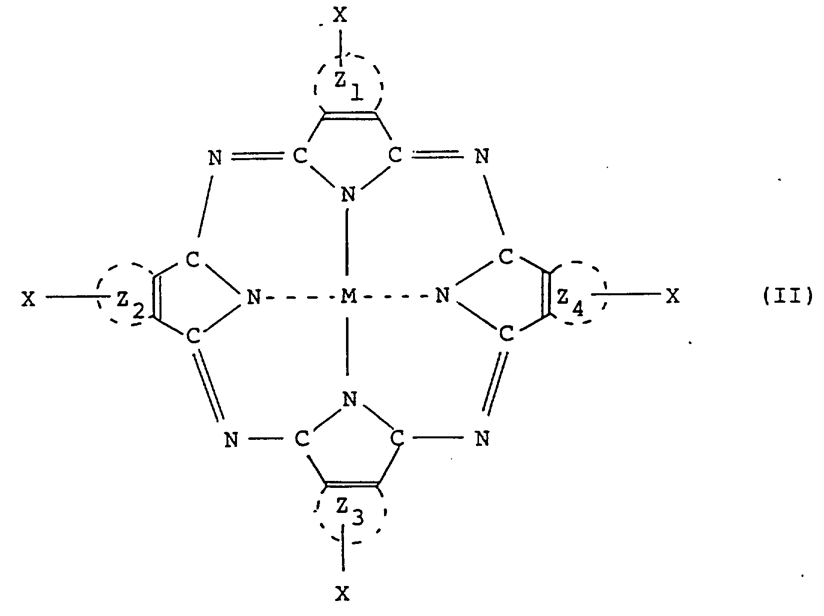 wherein M is a transition metal, and Z₁, Z₂, Z₃, Z₄ and X are as defined in claim 2.

7. Optical information recording medium according to one of claims 1 to 6, characterized in that the information recording layer contains a compound which can shift the maximum absorption wavelength of the information recording layer against the laser wavelength used to the shorter wavelength side by 20 to 100 nm.

8. Optical information recording medium according to one of claims 1 to 7, characterized in that the light absorption of the information recording layer is in the range of 1 to 20 % of the laser beam intensity used.

9. Optical information recording medium according to one of claims 1 to 8, characterized in that it does not comprise a reflective layer.

10. Optical information recording medium according to one of claims 1 to 9, characterized in that the information recording layer has a thickness within a range wherein the reflectance is made larger by light interference.

11. Optical information recording medium according to one of claims 1 to 10, characterized in that the organic dye (i) having a pyrolysis beginning temperature of 300 °C or less and the thermal quencher (ii) are used in a mass ratio of (i)/(ii) of 1/0.01 to 1/1.5.

12. A method for producing the optical information recording medium according to one of claims 1 to 11, comprising the steps of
(A) dissolving at least two organic dyes having different chemical structure in an organic solvent,
(B) coating a substrate with the solution, preferably by spin coating the substrate, or by dipping the substrate in the solution and picking up the substrate therefrom, or by spray coating,
and
(C) removing the solvent,
characterized in that, in step A, at least one dye having a pyrolysis beginning temperature of 300 °C or less, and being selected from derivatives of azaphthalocyanine, phthalocyanine and/or naphthalocyanine, and at least one dye being a thermal quencher and having a pyrolysis beginning temperature of 350 °C or higher are used.

13. An information playback or readout apparatus comprising an optical information recording medium, an optical head equipped with a laser beam generator capable of reading out information from the optical information recording medium, rotating means for rotating the optical information recording medium, a drive circuit for controlling the operation of the optical head and the rotational speed of the rotating means, a processor for controlling the drive circuit, input means for inputting information into the processor, and output means for outputting information from the processor, characterized in that the optical information recording medium is a medium according to one of claims 1 to 11.

14. The apparatus according to claim 13, characterized by a laser beam generator emitting a laser beam having a wavelength of 640 to 720 nm or of 780 to 830 nm.

15. A method for reading out information from an optical recording medium, comprising a substrate and an information recording layer formed on the substrate, which comprises
irradiating a laser beam on the information recording layer of the optical information recording medium, and reading out the information recorded on or in the optical information recording medium by means of the optical modulation of reflected or transmitted light, characterized in that an optical information recording medium according to one of claims 1 to 11 is used.

## Patentansprüche

1. Optisches Informationsaufzeichnungsmedium, das ein Substrat und eine auf dem Substrat ausgebildete Informationsaufzeichnungsschicht umfaßt, wobei die Informationsaufzeichnungsschicht mindestens zwei organische Farbstoffe umfaßt, die unterschiedliche chemische Strukturen aufweisen,
dadurch gekennzeichnet, daß
mindestens einer der organischen Farbstoffe mit unterschiedlicher chemischer Struktur ein organischer Farbstoff ist, bei dem die Temperatur des Pyrolysebeginns bei 300 °C oder darunter liegt und der unter den Derivaten von Azaphthalocyanin, Phthalocyanin und Naphthalocyanin ausgewählt ist, und daß
der andere organische Farbstoff ein thermischer Quencher ist, bei dem die Temperatur des Pyrolysebeginns bei 350 °C oder darüber liegt, und der die Funktion hat, eine Beeinträchtigung durch Wärmeeinwirkung zu verhindern, und daß
das Informationsaufzeichnungsmedium ein kontinuierliches Wiedergabe- oder Auslesevermögen des 10⁵ -fachen oder darüber bei einer Wiedergabe-Laserleistung von 0,5 bis 1,5 mW aufweist.

2. Optisches Informationsaufzeichnungsmedium nach Anspruch 1
dadurch gekennzeichnet, daß
die Informationsaufzeichnungsschicht enthält:
(i) mindestens einen organischen Farbstoff der Formel I 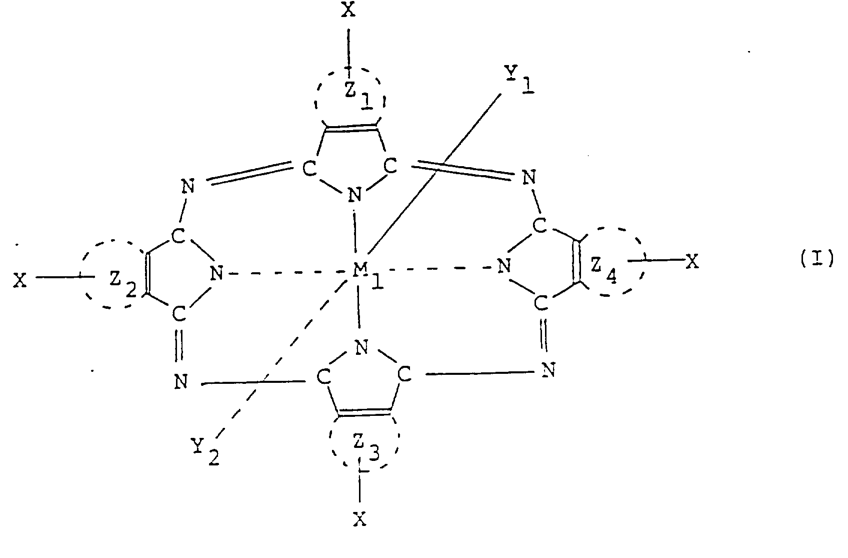 wobei bedeuten:
M₁ ein Metallatom, das unter Si, Ge und Sn ausgewählt ist, die zur Gruppe IV des Periodensystems gehören;
Z₁, Z₂, Z₃ und Z₄ unabhängig einen Pyridinring, einen Benzolring oder einen Naphthalinring, der nicht substituiert ist, oder einen oder mehrere einwertige Substituenten -X aufweist, wobei X eine Alkylgruppe, eine Alkenylgruppe, eine Alkylthiogruppe, eine Phenylgruppe, eine Acylgruppe oder eine trisubstituierte Silylgruppe ist;
Y₁ und Y₂ unabhängig -AR, -OR, -OAr, -OSi ( R)₃, -OSi ( OR)₃ ,
-OSi(OAr)₃ oder -OC(C₆ H₅)₃ , wobei bedeuten: R eine geradkettige oder verzweigte Alkylgruppe und Ar eine Phenylgruppe, eine substitutierte Phenylgruppe, eine Benzylgruppe oder eine substitutierte Benzylgruppe.

3. Optisches Informationsaufzeichnungsmedium nach Anspruch 2, dadurch gekennzeichnet, daß
der Gehalt an Azaphthalocyaninderivaten, Phthalocyaninderivaten und/oder Naphthalocyaninderivaten hoch genug ist, um ein Reflexionsvermögen des Informationsaufzeichnungsmediums von 20% oder darüber zu erhalten.

4. Optisches Informationsaufzeichnungsmedium nach einem der Ansprüche 1 bis 3, dadurch gekennzeichnet, daß
der thermische Quencher eine Substanz ist, die einen angeregten molekularen Zustand der Azaphthalocyaninderivate, Phthalocyaninderivate und/oder Naphthalocyaninderivaten zur Relaxation veranlassen kann.

5. Optisches Informationsaufzeichnungsmedium nach einem der Ansprüche 1 bis 4, dadurch gekennzeichnet, daß
der thermische Quencher ein kristalliner Farbstoff ist.

6. Optisches Informationsaufzeichnungsmedium nach einem der Ansprüche 1 bis 5, dadurch gekennzeichnet, daß
es als thermischen Quencher (ii) mindestens einen organischen Farbstoff der Formel II 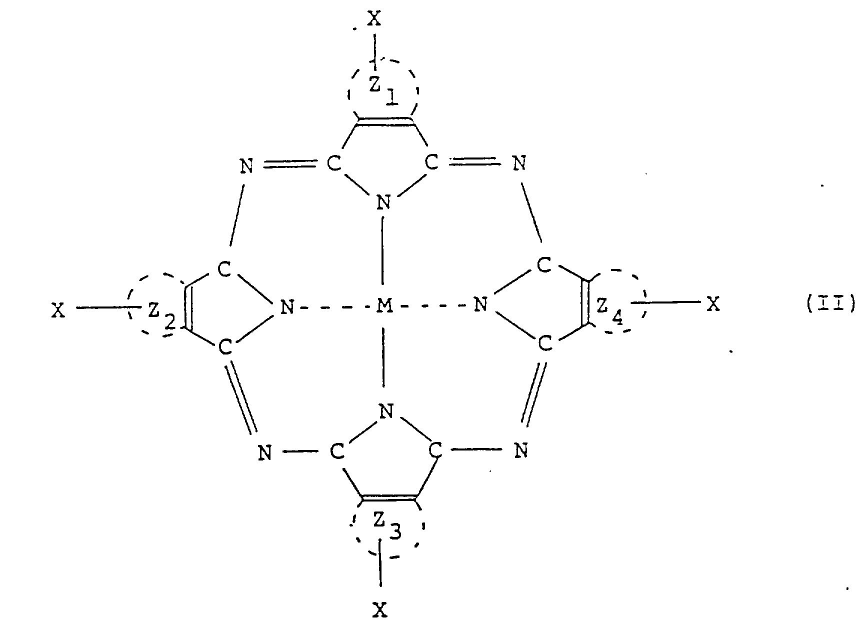 umfaßt, wobei
M ein Übergangsmetall ist und Z₁, Z₂, Z₃ , Z₄ und X wie in Anspruch 2 definiert sind.

7. Optisches Informationsaufzeichnungsmedium nach einem der Ansprüche 1 bis 6, dadurch gekennzeichnet, daß
das Informationsaufzeichnungsmedium eine Verbindung umfaßt, die die maximale Absorptionswellenlänge der Informationsaufzeichnungsschicht relativ zur verwendeten Laserwellenlänge um 20 bis 100 n m auf die Seite der kürzeren Wellenlängen verschieben kann.

8. Optisches Informationsaufzeichnungsmedium nach einem der Ansprüche 1 bis 7, dadurch gekennzeichnet, daß
die Lichtabsorption der Informationsaufzeichnungsschicht im Bereich von 1 bis 20% der verwendeten Laserstrahlintensität liegt.

9. Optisches Informationsaufzeichnungsmedium nach einem der Ansprüche 1 bis 8, dadurch gekennzeichnet, daß
es keine Reflexionsschicht umfaßt.

10. Optisches Informationsaufzeichnungsmedium nach einem der Ansprüche 1 bis 9, dadurch gekennzeichnet, daß
die Informationsaufzeichnungsschicht eine Dicke in einem Bereich aufweist, in dem das Reflexionsvermögen durch die Interferenz des Lichtes größer wird.

11. Optisches Informationsaufzeichnungsmedium nach einem der Ansprüche 1 bis 10, dadurch gekennzeichnet, daß
der organische Farbstoff (i), bei dem die Temperatur des Pyrolysebeginns bei 300 °C oder darunter liegt, und der thermische Quencher (ii) in einem Masseverhältnis von (i)/(ii) von 1/0,01 bis 1/1,5 verwendet werden.

12. Verfahren zur Herstellung des optischen Informationsaufzeichnungsmediums nach einem der Ansprüche 1 bis 11 mit den folgenden Schritten:
(A) Lösen von mindestens zwei organischen Farbstoffen einer unterschiedlichen chemischen Struktur in einem organischen Lösungsmittel,
(B) Beschichten eines Substrats mit der Lösung, bevorzugt durch Schleuderbeschichtung des Substrats oder durch Eintauchen des Substrats in die Lösung und Herausziehen des Substrats aus der Lösung oder durch Spühbeschichtung
und
(C) Entfernen des Lösungsmittels;
dadurch gekennzeichnet, daß
im Schritt A mindestens ein Farbstoff, bei dem die Temperatur des Pyrolysebeginns bei 300 °C oder darunter liegt, und der unter den Derivaten von Azaphthalocyanin, Phthalocyanin und/oder Naphthalocyanin ausgewählt ist, und mindestens ein Farbstoff verwendet wird, der ein thermischer Quencher ist und bei dem die Temperatur des Pyrolysebeginns bei 350 °C oder darüber liegt.

13. Informationswiedergabe- oder Informationsauslesevorrichtung, die umfaßt:
ein optisches Informationsaufzeichnungsmedium,
einen optischen Kopf, der mit einem Laserstrahlgenerator ausgestattet ist, der Informationen vom optischen Informationsaufzeichnungsmedium auslesen kann,
eine Dreheinrichtung zum Drehen des optischen Informationsaufzeichnungsmediums,
einen Antriebsschaltkreis zur Steuerung des Betriebs des optischen Kopfes und der Drehzahl der Dreheinrichtung,
einen Prozessor zur Steuerung des Antriebsschaltkreises,
eine Eingabeeinrichtung zur Eingabe von Informationen in den Prozessor und
eine Ausgabeeinrichtung zur Ausgabe von Informationen aus dem Prozessor,
dadurch gekennzeichnet, daß
das optische Informationsaufzeichnungsmedium ein Medium nach einem der Ansprüche 1 bis 11 ist.

14. Vorrichtung nach Anspruch 13, gekennzeichnet durch einen Laserstrahlgenerator, der einen Laserstrahl emittiert, der eine Wellenlänge von 640 bis 720 nm oder 780 bis 830 nm aufweist.

15. Verfahren zum Auslesen von Informationen aus einem optischen Informationsaufzeichnungsmedium, das ein Substrat und eine auf dem Substrat ausgebildete Informationsaufzeichnungsschicht aufweist, das die folgenden Schritte umfaßt:
- Aufstrahlen eines Laserstrahls auf die Informationsaufzeichnungsschicht des optischen Informationsaufzeichnungsmediums und
- Auslesen der auf oder in dem optischen Informationsaufzeichnungsmedium aufgezeichneten Information mit Hilfe der optischen Modulation des Reflexions- oder Transmissionslichts,
dadurch gekennzeichnet, daß
ein optisches Informationsaufzeichnungsmedium nach einem der Ansprüche 1 bis 11 verwendet wird.

## Revendications

1. Milieu d'enregistrement d'informations optiques, comprenant un substrat et une couche d'enregistrement d'informations formée sur le substrat, la couche d'enregistrement d'informations comprenant au moins deux colorants organiques ayant des structures chimiques différentes, caractérisé en ce que
au moins l'un des colorants organiques ayant une structure chimique différente est un colorant organique ayant une température de début de pyrolyse de 300 °C ou moins et est choisi parmi les dérivés de l'azaphtalocyanine, de la phtalocyanine et de la naphtalocyanine, et un autre des colorants organiques est un agent d'extinction thermique ayant une température de début de pyrolyse de 350 °C ou plus et une fonction pour empêcher une détérioration thermique,
et le milieu d'enregistrement d'informations a une capacité de restitution ou de lecture en continu de 10⁵ fois ou plus à une puissance laser de restitution de 0,5 à 1,5 mW.

2. Milieu d'enregistrement d'informations optiques selon la revendication 1, caractérisé en ce que la couche d'enregistrement d'informations comprend (i) au moins un colorant organique de formule I 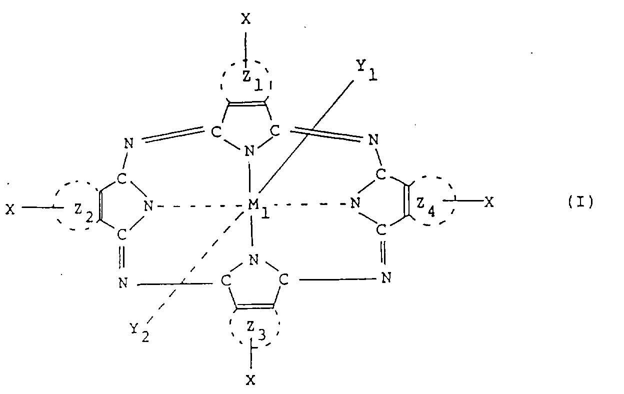 dans laquelle M₁ est un atome de métal choisi parmi Si, Ge et Sn appartenant au groupe IV du tableau périodique ; Z₁, Z₂, Z₃ et Z₄ sont indépendamment un cycle pyridine, un cycle benzène ou un cycle naphtalène non substitué ou ayant un ou plusieurs substituants -X monovalents, où X est un groupe alkyle, un groupe alcényle, un groupe alkylthio, un groupe phényle, un groupe acyle ou un groupe silyle trisubstitué ; Y₁ et Y₂ sont indépendamment -AR, -OR, -OAr, -OSi(R)₃, -OSi(OR)₃, -OSi(OAr)₃ ou -OC(C₆H₅)₃, où R est un groupe alkyle à chaîne linéaire ou ramifiée, et Ar est un groupe phényle, un groupe phényle substitué, un groupe benzyle ou un groupe benzyle substitué.

3. Milieu d'enregistrement d'informations optiques selon la revendication 2, caractérisé en ce que la teneur en dérivés d'azaphtalocyanine, dérivés de phtalocyanine et/ou dérivés de naphtalocyanine est suffisamment élevée pour obtenir une réflectance de la couche d'enregistrement d'informations de 20 % ou plus.

4. Milieu d'enregistrement d'informations optiques selon l'une des revendications 1 à 3, caractérisé en ce que l'agent d'extinction thermique est une substance qui peut relaxer un état moléculaire excité des dérivés d'azaphtalocyanine, des dérivés de phtalocyanine et/ou des dérivés de naphtalocyanine.

5. Milieu d'enregistrement d'informations optiques selon l'une des revendications 1 à 4, caractérisé en ce que l'agent d'extinction thermique est un colorant cristallin.

6. Milieu d'enregistrement d'informations optiques selon l'une des revendications 1 à 5, caractérisé en ce qu'il comprend en tant qu'agent d'extinction thermique (ii) au moins un colorant organique de formule II 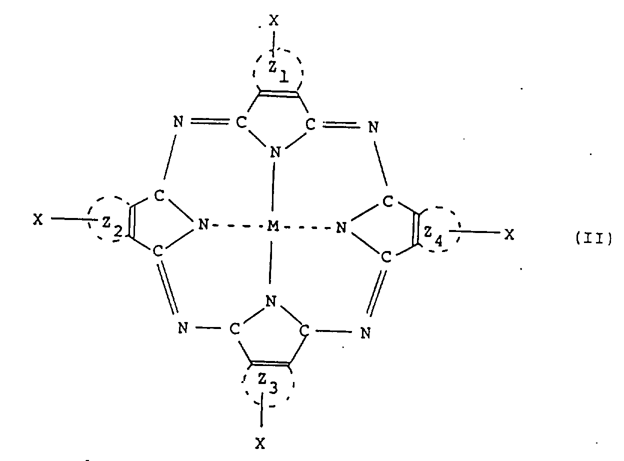 où M est un métal de transition, et z₁, Z₂, Z₃, Z₄ et X sont tels que définis dans la revendication 2.

7. Milieu d'enregistrement d'informations optiques selon l'une des revendications 1 à 6, caractérisé en ce que la couche d'enregistrement d'informations contient un composé qui peut déplacer de 20 à 100 nm la longueur d'onde d'absorption maximale de la couche d'enregistrement d'informations en fonction de la longueur d'onde laser utilisée au côté de longueur d'onde plus courte.

8. Milieu d'enregistrement d'informations optiques selon l'une des revendications 1 à 7, caractérisé en ce que l'absorption de lumière de la couche d'enregistrement d'informations est dans la gamme de 1 à 20 % de l'intensité du faisceau laser utilisé.

9. Milieu d'enregistrement d'informations optiques selon l'une des revendications 1 à 8, caractérisé en ce qu'il ne comprend pas de couche réfléchissante.

10. Milieu d'enregistrement d'informations optiques selon l'une des revendications 1 à 9, caractérisé en ce que la couche d'enregistrement d'informations a une épaisseur dans une gamme dans laquelle la réflectance est rendue plus grande par l'interférence lumineuse.

11. Milieu d'enregistrement d'informations optiques selon l'une des revendications 1 à 10, caractérisé en ce que le colorant organique (i) ayant une température de début de pyrolyse de 300 °C ou moins et l'agent d'extinction thermique (ii) sont utilisés dans un rapport de masses de (i)/(ii) de 1/0,01 à 1/1,5.

12. Procédé pour produire le milieu d'enregistrement d'informations optiques selon l'une des revendications 1 à 11, comprenant les étapes consistant à
(A) dissoudre au moins deux colorants organiques ayant une structure chimique différente dans un solvant organique,
(B) revêtir un substrat avec la solution, de préférence en revêtant le substrat par rotation, ou en immergeant le substrat dans la solution et en sortant le substrat de celle-ci, ou pour revêtement par pulvérisation, et
(C) éliminer le solvant,
caractérisé en ce qu'on utilise, dans l'étape A, au moins un colorant ayant une température de début de pyrolyse de 300 °C ou moins, et choisi parmi les dérivés de l'azaphtalocyanine, de la phtalocyanine et/ou de la naphtalocyanine, et au moins un colorant étant un agent d'extinction thermique et ayant une température de début de pyrolyse de 350 °C ou plus.

13. Appareil de restitution ou de lecture d'informations comprenant un milieu d'enregistrement d'informations optiques, une tête optique équipée d'un générateur de faisceau laser capable de lire des informations à partir du milieu d'enregistrement d'informations optiques, des moyens de rotation pour faire tourner le milieu d'enregistrement d'informations optiques, un circuit d'entraînement pour contrôler le fonctionnement de la tête optique et la vitesse de rotation des moyens de rotation, un processeur pour contrôler le circuit d'entraînement, des moyens d'entrée pour entrer des informations dans le processeur, et des moyens de sortie pour extraire des informations du processeur, caractérisé en ce que le milieu d'enregistrement d'informations optiques est un milieu selon l'une des revendications 1 à 11.

14. Appareil selon la revendication 13, caractérisé par un générateur de faisceau laser émettant un faisceau laser ayant une longueur d'onde de 640 à 720 nm ou de 780 à 830 nm.

15. Procédé pour lire des informations à partir d'un milieu d'enregistrement optique, comprenant un substrat et une couche d'enregistrement d'informations formée sur le substrat, qui comprend les étapes consistant à irradier un faisceau laser sur la couche d'enregistrement d'informations du milieu d'enregistrement d'informations optiques, et à lire les informations enregistrées sur ou dans le milieu d'enregistrement d'informations optiques au moyen de la modulation optique d'une lumière réfléchie ou transmise, caractérisé en ce qu'on utilise un milieu d'enregistrement d'informations optiques selon l'une des revendications 1 à 11.
